# FASCICULE DE BREVET EUROPEEN

(11) **EP 0 960 484 B1**
(45) Date de publication et mention de la délivrance du brevet: **12.09.2001**
(21) Numéro de dépôt: 98908169.0
(22) Date de dépôt: 11.02.1998
(51) Int. Cl.: H04B 1/38, H01Q 1/24

(54) **COMBINE TELEPHONIQUE RADIO**
MODIFIZIERTES MOBILFUNKTELEFON
COMBINED RADIO TELEPHONE HANDSET

(30) Priorité: 12.02.1997 FR 9701616
(43) Date de publication de la demande: 01.12.1999
(73) Titulaire: SAGEM SA, 75116 Paris (FR)
(72) Inventeur: ROMAO, Fernando, F-78360 Montesson (FR); ALOS, Raphael, F-95520 Osny (FR)
(74) Mandataire: Bloch, Gérard
(86) Numéro de dépôt international: FR9800263
(87) Numéro de publication internationale: WO9836504

(56) Documents cités:
- EP-A- 0 603 012
- GB-A- 2 280 322
- US-A- 5 507 012

## Description

Les combinés téléphoniques radio, et surtout les terminaux mobiles, connaissent actuellement un grand développement, de par la liberté de déplacement qu'ils offrent aux utilisateurs.

Ces combinés téléphoniques, terminaux mobiles ou combinés de téléphone sans fil, comportent un boîtier, de forme sensiblement parallélépipédique, prolongé par une antenne.

L'une des deux grandes faces du boîtier est une face d'interface vocale combiné-utilisateur, avec, dans une partie du boîtier, un microphone et, dans l'autre partie, hors de laquelle l'antenne fait saillie, un haut-parleur.

La puissance sonore restituée étant limitée par l'autonomie en énergie du combiné, l'utilisateur doit plaquer le haut-parleur contre son oreille, ce qui évite aussi de gêner les personnes voisines. L'antenne se trouve ainsi à proximité immédiate de sa tête, si bien que celle-ci atténue sensiblement les transmissions radio, sans parler du problème du rayonnement électromagnétique.

La présente invention vise à éliminer ces inconvénients.

A cet effet, l'invention concerne un combiné téléphonique radio, comportant, dans un boîtier, une partie comprenant, entre deux portions de face avant et de face arrière du boîtier, un haut-parleur et une antenne inclinée de l'avant vers l'arrière et en saillie hors de ladite partie, caractérisé par le fait que l'antenne s'étend sensiblement jusqu'au droit de ladite portion de face arrière en position de fonctionnement du combiné.

L'antenne s'éloigne ainsi de l'obstacle radio que constitue la tête de l'utilisateur et subit de ce fait une atténuation réduite.

On remarquera que le document EP-A-0 603 012 enseigne un combiné téléphonique dont l'antenne, déployable, peut s'étendre inclinée jusqu'au droit de la face arrière. Mais en position de fonctionnement, l'antenne de ce document doit s'étendre bien au-delà.

L'invention sera mieux comprise à l'aide de la description suivante d'une forme de réalisation préférée du combiné téléphonique radio de l'invention, en référence au dessin annexé, sur lequel :
- la figure 1 est une vue de face du combiné et
- la figure 2 en est une vue latérale de droite.

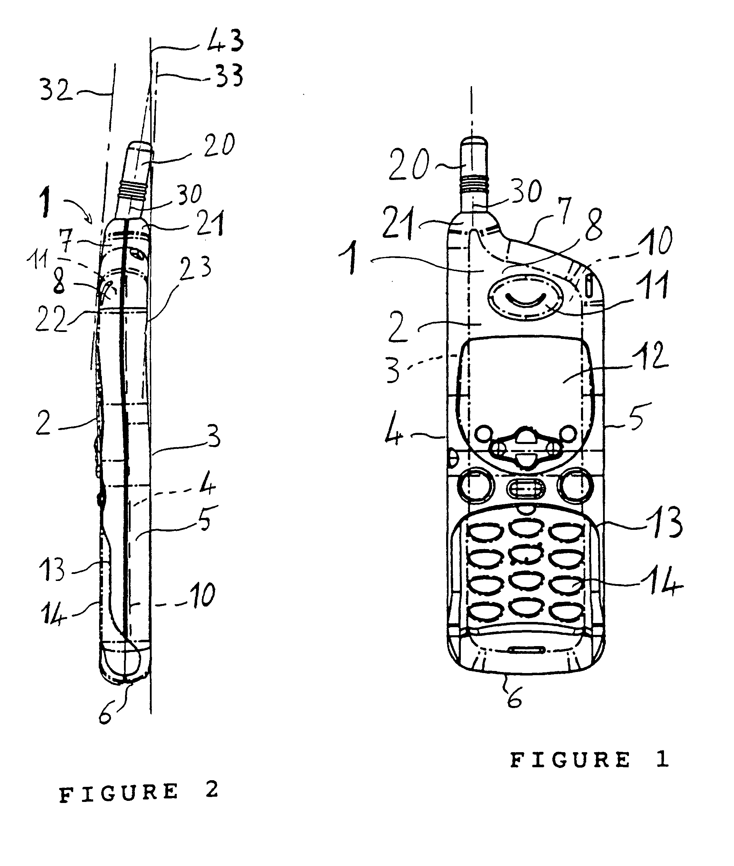

Le combiné représenté comporte un boîtier 1 de forme globalement parallélépipédique rectangle présentant une face avant 2, d'interface avec un utilisateur, et une face arrière 3 (fig. 2).

Les faces avant 2 et arrière 3 sont reliées par deux faces latérales opposées 4, 5 et par deux faces latérales d'extrémité opposées 6, 7 perpendiculaires aux plans des figures.

Dans le boîtier 1, une partie 8 limitée par la face 7 comprend, entre deux portions 22, 23 respectives de face avant et de face arrière du boîtier 1, un haut-parleur 11, tourné vers la face 22, et une antenne 20 d'axe 30 fait saillie de cette partie 8, en extrémité (7) du boîtier 1. L'antenne 20 s'étend inclinée de l'avant (22) vers l'arrière (23) sensiblement jusqu'au droit de la portion 23 de la face arrière. Sur la figure 2, les plans 32 et 33, représentés par des lignes en pointillés, sont respectivement tangents sensiblement aux portions respectives 22 et 23, l'antenne 20 s'étendant sensiblement dans la zone limitée par ces deux plans 32, 33, son extrémité libre étant ici sensiblement dans le plan 33 et donc éloignée de la portion de face avant 23 sur laquelle l'utilisateur du combiné applique son oreille.

En outre ici, l'antenne 20 s'étend sensiblement jusqu'au droit de la face arrière 3 du boîtier 1, comme l'illustre le plan 43 sensiblement tangent à la face arrière 3 considérée dans sa totalité.

Une carte électronique 10, sensiblement plane et ici sensiblement parallèle au plan 43, porte les composants électroniques usuels pour alimenter le haut-parleur 11, un microphone (non représenté) situé à proximité d'un clavier 14 protégé par un couvercle rabattable 13 et un afficheur 12 intégré à la face avant 2.

L'antenne 20 est raccordée électriquement et fixée à la carte 10, en étant inclinée sur celle-ci, son axe 30 coupant le plan 43. L'antenne 20 fait saillie hors du boîtier 1 par un bossage externe 21 de celui-ci. Le bossage 21 accroît la distance entre l'antenne 20 et le haut-parleur 11, c'est-à-dire l'oreille de l'utilisateur.

Des essais comparatifs ont montré que l'atténuation du champ magnétique H, du pied de l'antenne 20 au haut-parleur 11, passait ainsi d'un facteur 0,83 sans bossage, à un facteur 0,5 avec bossage 21, de par l'accroissement de distance.

Dans cet exemple, il s'agit d'une antenne non déployable. Il peut être prévu que l'antenne 20 s'étende, en position de fonctionnement du combiné, sensiblement jusqu'au droit (43) de la face arrière 3, intégrant alors le couvercle 13, ou encore, dans d'autres formes de réalisation du combiné, jusqu'au droit (33) de la portion de face arrière 23, lorsque celle-ci est mobile.

## Revendications

1. Combiné téléphonique radio, comportant, dans un boîtier (1), une partie (8) comprenant, entre deux portions de face avant (22) et de face arrière (23) du boîtier (1), un haut-parleur (11) et une antenne (20) inclinée de l'avant (22) vers l'arrière (23) et en saillie hors de ladite partie (8), **caractérisé par** le fait que l'antenne (20) s'étend sensiblement jusqu'au droit (33) de ladite portion de face arrière (23) en position de fonctionnement du combiné.

2. Combiné selon la revendication 1, dans lequel l'antenne (20) s'étend sensiblement jusqu'au droit (43) de la face arrière (3) du boîtier (1).

3. Combiné selon la revendication 1, dans lequel il est prévu une carte électronique (10) sensiblement plane et l'antenne (20) est inclinée sur la carte (10).

4. Combiné selon l'une des revendications 1 à 3, dans lequel l'antenne (20) fait saillie hors du boîtier (1) par un bossage externe (21) de celui-ci.

5. Combiné selon l'une des revendications 1 à 4, dans lequel l'antenne (20) est une antenne non déployable.

## Claims

1. Radio telephone handset comprising, in a housing (1), a part (8) including, between two front face (22) and rear face (23) portions of the housing (1), a loudspeaker (11) and an antenna (20) sloping from the front (22) towards the rear (23) and projecting from said part (8), **characterised by** the fact that the antenna (20) extends substantially to the plane (33) of said rear face portion (23) in the operating position of the handset.

2. Handset according to claim 1, wherein the antenna (20) extends substantially to the plane (43) of the rear face (3) of the housing (1).

3. Handset according to claim 1, wherein a substantially flat electronic card (10) is provided and the antenna (20) slopes onto the card (10).

4. Handset according to one of claims 1 to 3, wherein the antenna (20) projects from the housing (1) by an external protuberance (21) of the latter.

5. Handset according to one of claims 1 to 4, wherein the antenna (20) is a non-spreadable antenna.

## Patentansprüche

1. Funktelefon, das in einem Gehäuse (1) einen Abschnitt (8) aufweist, der zwischen zwei Abschnitten der Vorderseite (22) und der Rückseite (23) des Gehäuses (1) einen Lautsprecher (11) und eine Antenne (20) aufweist, die von der Vorderseite (22) zur Rückseite (23) geneigt ist und aus dem Abschnitt (8) herausragt,
**dadurch gekennzeichnet, dass**
sich in Betriebsposition des Funktelefons die Antenne (20) im wesentlichen bis an die gleiche Ebene (33) wie der sagenannte Abschnitt der Rückseite (23) erstreckt.

2. Funktelefon nach Anspruch 1,
**dadurch gekennzeichnet, dass**
sich die Antenne (20) im wesentlichen bis auf die gleiche Ebene (43) wie die Rückseite (3) des Gehäuses (1) erstreckt.

3. Funktelefon nach Anspruch 1,
**dadurch gekennzeichnet, dass**
eine elektronische Karte (10) vorgesehen ist, die im wesentlichen eben ist, und dass sich die Antenne (20) über die Karte (10) neigt.

4. Funktelefon nach einem der Ansprüche 1 bis 3,
**dadurch gekennzeichnet, dass**
die Antenne (20) aus dem Gehäuse (1) aus einem seiner äußeren Vorsprünge (21) herausragt.

5. Funktelefon nach einem der Ansprüche 1 bis 4,
**dadurch gekennzeichnet, dass**
die Antenne (20) eine nicht ausfahrbare Antenne ist.
